(19) Europäisches Patentamt
European Patent Office
Office européen des brevets

(11) Veröffentlichungsnummer: **0 433 810 A2**

(12) # EUROPÄISCHE PATENTANMELDUNG

(21) Anmeldenummer: **90123612.5**

(22) Anmeldetag: **08.12.90**

(51) Int. Cl.5: **C09B 67/54**, C09B 67/26, C09B 69/02

(30) Priorität: **22.12.89 DE 3942467**

(43) Veröffentlichungstag der Anmeldung: **26.06.91 Patentblatt 91/26**

(84) Benannte Vertragsstaaten: **CH DE FR GB LI**

(71) Anmelder: **BAYER AG**

**W-5090 Leverkusen 1 Bayerwerk(DE)**

(72) Erfinder: **Michna, Martin, Dr.**
**Ostring 39**
**W-5024 Pulheim(DE)**
Erfinder: **Zillger, Hans-Werner**
**Am Burghart 15**
**W-5202 Hennef(DE)**
Erfinder: **Tegtmeyer, Dietrich, Dr.**
**Gerstenkamp 19**
**W-5000 Köln 80(DE)**

(54) **Verfahren zur Herstellung lagerstabiler Farbstofflösungen.**

(57) Lagerstabile wäßrige Lösungen von anionischen Farbstoffen, vorzugsweise Reaktivfarbstoffen erhält man sehr kostengünstig durch Druckpermeation, wenn man die Ausgangslösung (englisch:"feed solution") für die Druckpermeation durch Verrühren des gegebenenfalls getrockneten Preßkuchens oder der Suspension des Rohfarbstoffs mit einer Elektrolytlösung herstellt.

EP 0 433 810 A2

## VERFAHREN ZUR HERSTELLUNG LAGERSTABILER FARBSTOFFLÖSUNGEN

Gegenstand der vorliegenden Erfindung ist ein Verfahren zur Herstellung von hochkonzentrierten, wäßrigen Lösungen von anionischen Farbstoffen, insbesondere Reaktivfarbstoffen. Um stabile konzentrierte, wäßrige Lösungen von Farbstoffen und Weißtönern zu erhalten, muß häufig der Gehalt an Salzen, wie er sich durch die Synthese und Isolierung ergibt, stark vermindert werden. Technisch geschieht dies überwiegend durch die Druckpermeation, wobei salzhaltiges Permeat durch eine teildurchlässige Membran ausgeschleust und durch entionisiertes Wasser ersetzt wird. In vielen Fällen wird noch ein Aufkonzentrationsschritt angeschlossen, wobei nur Permeat ausgeschleust, aber kein Wasser zugesetzt wird.

Für eine weitgehende Entsalzung ist bei technischen Prozessen ein 1- bis 4-facher Austausch des ursprünglichen Wasservolumens erforderlich. Um die Kosten für diesen Verfahrensschritt niedrig zu halten ist es daher vorteilhaft, von kleinen Volumen, d.h. hohen Konzentrationen, auszugehen.

Im Idealfall könnte man von Suspensionen der zu entsalzenden Produkte ausgehen. Dies macht jedoch besondere Bauformen der Druckpermeationsmodule erforderlich, um ein Verstopfen bzw. Belegung der Membranfläche mit Produkt zu verhindern. Solche Anlagen haben allerdings wesentlich höhere Investitions- und Betriebskosten als Anlagen, welche nur Lösungen verarbeiten können.

Es wurde nun überraschenderweise gefunden, daß man diese Nachteile vermeiden und besonders hochkonzentrierte, echte Farbstofflösungen für die Druckpermeation einsetzen kann, wenn man die Ausgangslösung (englisch:"feed solution") für die Druckpermeation durch Verrühren des gegebenenfalls getrockneten Preßkuchens oder der Suspension des Rohfarbstoffs mit einer Lösung von Lithium-, oder Ammoniumsalzen von organischen oder anorganischen Säuren herstellt.

Dieser Effekt ist deshalb als überraschend zu bezeichnen, weil normalerweise der Zusatz von Salzen zu Farbstofflösungen deren Löslichkeit verringert (Aussalzen!). Die erfindungsgemäßen Salze erhöhen dagegen die Löslichkeit der Farbstoffe.

Geeignete Salze zur Herstellung der Elektrolytlösungen sind Lithium- und Ammoniumsalze von anorganischen und organischen Säuren, insbesondere jedoch Lithiumsalze und gegebenenfalls weiter substituierte Trialkylammoniumsalze der Halogenwasserstoffsäuren, der Sauerstoffsäuren des Schwefels und des Stickstoffs sowie aliphatische und aromatische Carbon-, Sulfon- und Phosphonsäuren, bevorzugt jedoch die Lithiumsalze sowie die Trialkylammoniumsalze der Struktur

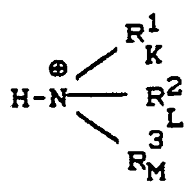

$R^1$ = $C_1$-$C_4$-Alkyl
$R^2$ = $-(CH\text{-}CH\text{-}O)_nH$
$R^3$ =

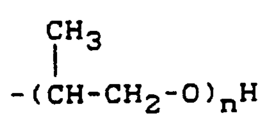

oder

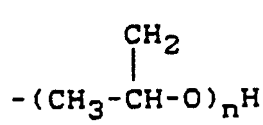

K = 0 bis 2
L = 0 bis 3

M = 0 bis 3
K + L + M = 3
n = 1 bis 4

der Salpetersäure, der Kohlensäure und der Citronensäure.

Die erfindungsgemäßen Salze liegen in den Ausgangslösungen vor der Druckpermeation in Konzentrationen zwischen 0,1 bis 20 Gew.-%, bevorzugt jedoch zwischen 0,5 und 5 Gew.-%, vor.

Bei der praktischen Durchführung des Verfahrens geht man so vor, daß man die nach der Synthese vorliegende und schon Salze enthaltende Reaktionssuspension mit den geeigneten Salzen in fester Form oder als konzentrierte Lösung versetzt, so daß sich die für eine Lösung des Farbstoffs erforderliche Konzentration des betreffenden Salzes ergibt.

Bevorzugterweise wird jedoch der Farbstoff zunächst isoliert und der salzhaltige Preßkuchen dann in einer Lösung eines geeigneten Salzes angeschlagen. Die Konzentration dieser Salzlösung wird so gewählt, daß der Farbstoff vollständig in Lösung geht.

Geeignete Farbstoffe, die zu lagerstabilen Lösungen verarbeitet werden sollen, sind anionische Farbstoffe insbesondere aber Reaktivfarbstoffe. Als Reaktivfarbstoffe kommen auch solche mit zwei oder mehreren gleichen oder verschiedenen Reaktivgruppen in Frage.

Die Reaktivfarbstoffe können den verschiedensten Klassen angehören, z.B. der Reihe der metallfreien oder metallhaltigen Mono- oder Polyazofarbstoffe, metallfreien oder metallhaltigen Azaporphinfarbstoffe wie Kupfer-, Kobalt-, oder Nickelphthalocyaninfarbstoffe, der Anthrachinon-, Oxazin-, Dioxazin-, Triphenylmethan, Nitro-, Azomethin-, metallfreien oder metallhaltigen Formazanfarbstoffe.

Unter dem Begriff "Farbstoff" sollen im Rahmen dieser Erfindung im übrigen auch anionische Weißtöner verstanden werden.

Die Lösungen werden einer Druckpermeation an üblichen asymmetrischen Polymermembranen unterworfen, wobei salzhaltiges Permeat ausgeschleust und gegebenenfalls ganz oder teilweise durch entionisiertes Wasser ersetzt wird.

Vorzugsweise wird die Druckpermeation, also Reversosmose und Ultrafiltration, angewendet, bei der der Durchtritt von Wasser und evtl. gelösten Stoffen durch die semipermeable Membrane unter der treibenden Kraft eines den osmotischen Druck übersteigenden hydrostatischen Druckes stattfindet.

Die Druckpermeation für das erfindungsgemäße Verfahren läßt sich auf allen handelsüblichen Druckpermeationsgeräten durchführen. Solche Geräte können z.B. als Platten-, Rohr-, Schlauch-, Hohlfaser oder Hohlfeinfasermodul ausgebildet sein. Erfindungsgemäß verwendbare und in die oben beschriebenen Module einbaubare Membranen sind z.B. solche aus Cellulose, Cellulosedi- bzw. -triacetat oder solche aus synthetischen Polymeren wie z.B. Polyamiden, Polyolefinen und Polysulfonen. Auch Membranen aus porösem Glas oder "dynamische Membranen" gebildet aus Schwermetalloxiden und z.T. wasserlöslichen Polymeren wie z.B. Polyacrylsäure können verwendet werden.

Die nach dem erfindungsgemäßen Verfahren hergestellten Lösungen können nach Zusatz eines Puffers und gegebenenfalls eines oder mehreren wassermischbaren organischen Lösungsmittels oder Lösevermittlers verwendet werden.

Geeignete Mittel sind beispielsweise offenkettige oder cyclische Amide, Harnstoffe, Sulfone und Sulfoxide,. ein- und mehrwertige Alkohole sowie deren Ether, Polyether und daraus abgeleitete Ester sowie Dicyandiamid. Gegebenenfalls können diese Mittel auch vor der Druckpermeation zugesetzt werden um die Konzentration der Lösung noch weiter erhöhen zu können. Ein Teil der Zusätze geht dann allerdings bei der Druckpermeation in das Permeat.

Die nach dem erfindungsgemäßen Verfahren hergestellten Lösungen können aber auch gegebenenfalls nach Zusatz von Puffern und geeigneten Stellmitteln durch Sprühtrocknung oder andere Trocknungsverfahren zu festen Formierungen aufgearbeitet werden. Gegebenenfalls können Puffer und Stellmittel auch nach der Trocknung zugesetzt werden.

Man erhält so lagerstabile konzentrierte Lösungen von Farbstoffen und Weißtönern, die sich hervorragend eignen zum Färben von flächenförmigen Gebilden, überwiegend textilen Substraten.

Beispiel 1

36,18 kg Preßkuchen des Farbstoffs der Formel

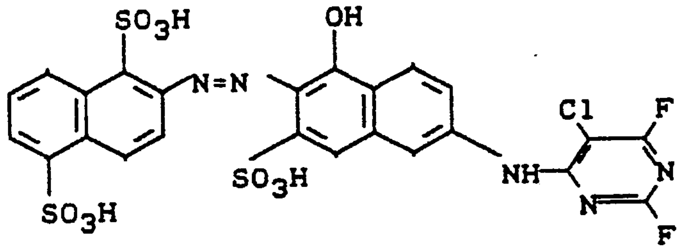

(I)

(als Na-Salz)

werden in 226,7 kg $LiHCO_3$-Lösung (4 %ig) bei einer Temperatur von 45 °C gelöst. Die Lösung enthält dann neben $LiHCO_3$ 8,1 % Reinfarbe und 0,22 % $Cl^-$.

Diese Lösung wird bei einer Temperatur von ca. 40-45 °C und einen pH-Wert von 7,5 und einem Druck von 40 bar auf einem Platten-Modul entsalzt. Hierbei werden 788,7 kg salzhaltige Permeat kontinuierlich durch 788,7 kg entmineralisiertem Wasser ersetzt und anschließend durch Entfernen von 168,9 kg salzhaltigem Permeat aufkonzentriert. Als Membran wird eine handelsübliche Composite-Membran (Trägerschicht: Polysulfon, Membranschicht: Polyamid) verwendet.

94 kg Konzentrat werden mit 2 kg Dicyandiamid und 3,5 kg entmineralisierten Wasser versetzt und mit 0,5 kg Borsäure gepuffert.

Man erhält eine niedviskose, lagerstabile Flüssigeinstellung des Farbstoffs der Formel (I) mit 21,2 % Reinfarbe, 2 % Dicyandiamid, 0,5 % Borsäure und Wasser ad 100 %. Der pH-Wert der Einstellung beträgt 7,5; $Cl^-$ -Gehalt:

Beispiel 2

10 kg Preßkuchen des Farbstoffs der Formel (I) (Na-Salz) werden in 73,3 kg Lithiumcitrat-Lösung (4 %ig) bei einer Temperatur von 40 °C gelöst. Die Lösung enthält dann neben Lithiumcitrat 4,2 % Reinfarbe und 0,86 % $Cl^-$.

Diese Lösung wird bei einer Temperatur von 40 °C, einen pH von 7,5 und einen Druck von 40 bar auf einen Platten-Modul (mit Polysulfonmembran) entsalzt.

Hierzu werden 166,6 kg salzhaltiges Permeat kontinuierlich durch 166,6 kg entmineralisiertem Wasser ersetzt und anschließend durch Entfernen von 67 kg salzhaltigen Permeat aufkonzentriert. 16,3 kg Konzentrat werden mit 0,35 kg Dicyandiamid und 0,6 kg entmineralisiertem Wasser versetzt und mit 0,09 kg Borsäure gepuffert.

Man erhält eine niedrigviskose, lagerstabile Flüssigeinstellung des Farbstoffs der Formel (I) mit 21,2 % Reinfarbe, 2 % Dicyandiamid, 0,5 % Borsäure und Wasser ad 100 %. Der pH-Wert der Einstellung beträgt 7,5; $Cl^-$-Gehalt;

Beispiel 3

10 kg Preßkuchen des Farbstoffs der Formel

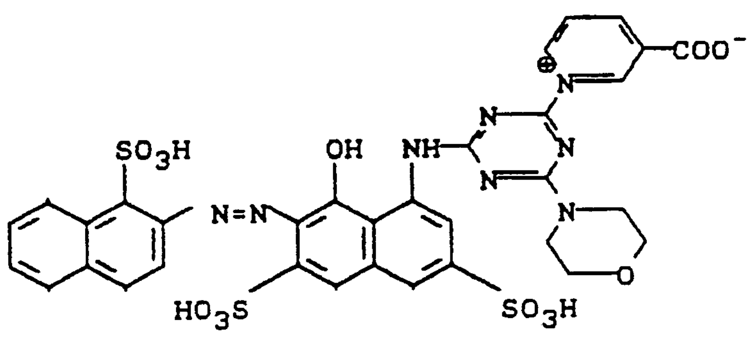

(II)

(als Na-Salz)

werden in 45,6 kg $LiNO_3$-Lösung (4 %ig) bei RT gelöst. Die Lösung enthält dann neben $LiNO_3$ ca. 8 %.

Reinfarbe und 0,23 % Cl⁻. Diese Lösung wird bei Raumtemperatur, einem pH-Wert von 7,5 und einem Druck von 40 bar auf einem Platten-Modul entsalzt.

Hierzu werden 111,2 kg salzhaltiges Permeat kontinuierlich durch 111,2 kg entmineralisiertes Wasser ersetzt und anschließend durch Entfernen von 30,1 kg salzhaltigem Permeat aufkonzentriert. 25,5 kg Konzentrat werden mit 0,54 kg Dicyandiamid und 1,46 kg entmineralisiertem Wasser versetzt und mit 0,14 kg Borsäure gepuffert.

Man erhält eine niedrigviskose, lagerstabile Flüssigeinstellung des Farbstoffs der Formel (II) mit ca. 16 % Reinfarbe, 0,5 % Borsäure, 2 % Dicyandiamid und Wasser ad 100 %. Der pH-Wert der Einstellung beträgt 7,5; $Cl^-$-Gehalt:

Beispiel 4

285,8 kg Preßkuchen des Farbstoffs der Formel

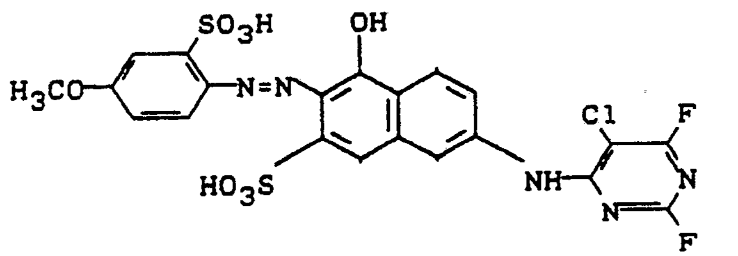

(III)

(als Na-Salz)

werden in 1.300 kg Lithiumoxalatlösung (3 %ig) bei einer Temperatur von 40° C gelöst. Die Lösung enthält dann neben Lithiumoxalat 5,5 % Reinfarbe und 0,63 % $Cl^-$.

Diese Lösung wird bei einer Temperatur von ca. 35-40° C, einem pH von 7,5 und einem Druck von 40 bar auf einem Platten-Modul (mit Polysulfonmembran) entsalzt. Hierzu werden 5568 kg salzhaltiges Permeat kontinuierlich durch 5568 kg entmineralisiertes Wasser ersetzt und anschließend durch Entfernen von 824,7 kg salzhaltigem Permeat aufkonzentriert.

761,3 kg Konzentrat werden mit 12,7 kg Dicyandiamid und 18,6 kg entmineralisiertem Wasser versetzt und mit 0,4 kg Borsäure gepuffert.

Man erhält eine niedrigviskose, lagerstabile Flüssigeinstellung des Farbstoffs der Formel (III) mit 1,6 % Dicyandiamid, 0,5 % Borsäure und Wasser ad 100 %. Der pH-Wert der Einstellung beträgt 7,5; $Cl^-$-Gehalt:

Beispiel 5

332 kg Preßkuchen des Farbstoffs der Formel

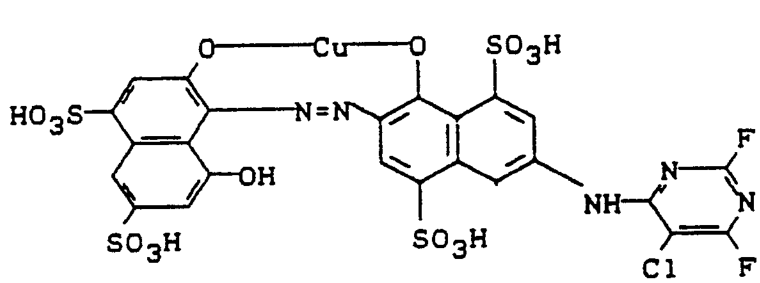

(IV)

(als Na-Salz)

werden in 2181 kg Lithiumnitrat (4 %ig) bei einer Temperatur von -30° C gelöst. Die Lösung enthält darin neben Lithiumnitrat 3,3 % Reinfarbe und 1,5 % $Cl^-$.

Diese Lösung wird bei einer Temperatur von 25-30° C, einem pH von ca. 5 und einem Druck von 40 bar auf einem Platten-Modul (mit Polysulfonmembran) entsalzt.

Hierzu werden 7539 kg salzhaltiges Permeat kontinuierlich durch 7539 kg entmineralisiertes Wasser ersetzt und anschließend nach Entfernen von 1613,5 kg salzhaltigem Permeat mit 30 kg ε-Caprolactam und

65,5 kg entmineralisiertem Wasser versetzt und mit 5 kg Borsäure gepuffert.

Man erhält eine niedrigviskose, lagerstabile Flüssigeinstellung des Farbstoffs der Formel (IV) mit 8,4 % Reinfarbe, 3 % ε-Caprolactam, 0,5 % Borsäure und Wasser ad 100 %. Der pH-Wert der Einstellung beträgt 7,5; $Cl^-$ -Gehalt:

Farbstoff-Verlust im Permeat:

Beispiel 6

935 kg Kondensationsbrühe des Farbstoffs der Formel

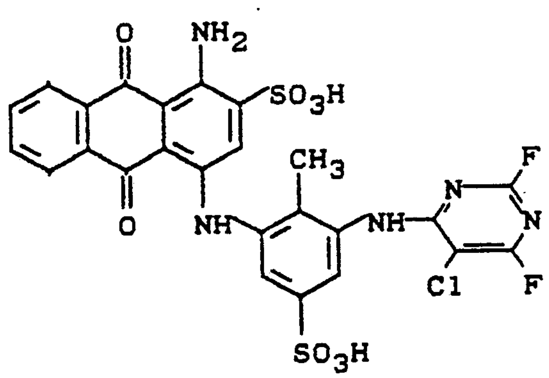

(V)

(als Na-Salz)

werden in 1065 kg Lithiummethansulfonat (6 %ig) bei einer Temperatur von -35° C gelöst. Die Lösung enthält dann neben Lithiummethansulfonat 7,56 % Reinfarbe und 0,21 % $Cl^-$.

Diese Lösung wird bei einer Temperatur von ca. 30-35° C, einem pH von 6 und einem Druck von 40 bar auf einem Platten-Modul (mit Polysulfonmembran) entsalzt.

Hierzu werden 4000 kg salzhaltiges Permeat kontinuierlich durch 4000 kg entmineralisiertes Wasser ersetzt und anschließend durch Entfernen von 1.118,4 kg salzhaltigem Permeat aufkonzentriert. 881,6 kg Konzentrat werden mit 100,8 kg ε-Caprolactam und 20,2 kg entmineralisiertem Wasser versetzt und mit 5 kg Borsäure gepuffert.

Man erhält eine niedrigviskose, lagerstabile Flüssigeinstellung des Farbstoffs der Formel (V) mit 15 % Reinfarbe, 10 % ε-Caprolactam, 0,5 % Borsäure und Wasser ad 100 %. Der pH-Gehalt der Einstellung beträgt 7,5; $Cl^-$-Gehalt:

Farbstoffverlust im Pemeat:

Beispiel 7

1807 kg Preßkuchen des Farbstoffs der Formel

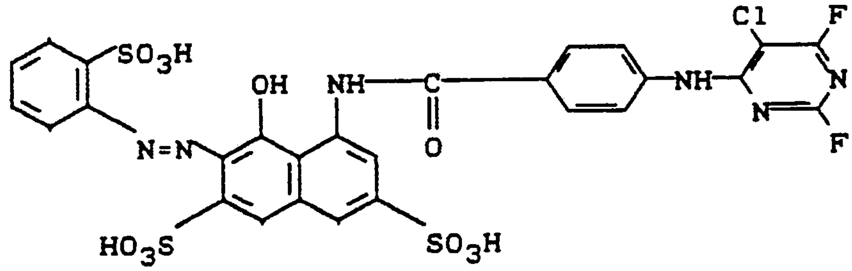

(VI)

(als Na-Salz)

werden in 963 kg Lithium-p-Toluolsulfonat (6 %ig) bei einer Temperatur von 40-45° C gelöst. Die Lösung enthält dann neben Lithium-p-Toluolsulfonat 4,6 % Reinfarbe und 0,98 % $Cl^-$.

Diese Lösung wird bei einer Temperatur von ca. 40° C, einem pH von 7,5 und einem Druck von 40 bar auf einem Platten-Modul (mit Polysulfonmembran) entsalzt.

Hierzu werden 8310 kg salzhaltiges Permeat kontinuierlich durch 8310 kg entmineralisiertes Wasser ersetzt und anschließend durch Entfernen von 1967 kg salzhaltigem Permeat aufkonzentriert. 803 kg Konzentrat werden mit 180,6 kg $\epsilon$-Caprolactam und 15,2 kg entmineralisiertem Wasser versetzt und mit 5 kg Borsäure gepuffert.

Man erhält eine niedrigviskose, lagerstabile Flüssigeinstellung des Farbstoffs der Formel (VI) mit 12,75 %. Reinfarbe, 18 % $\epsilon$-Caprolactam, 0,5 % Borsäure und Wasser ad 100 %. Der pH-Wert der Einstellung beträgt 7,5; $Cl^-$-Gehalt:

Beispiel 8

5 kg Suspension des Farbstoffs der Formel

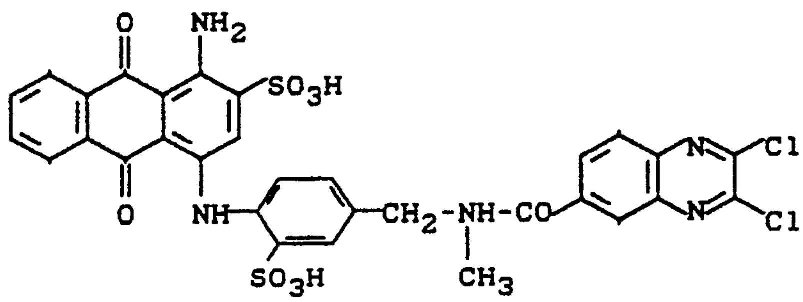

(VII)

werden in 5 kg einer 5%igen Lösung des Lithiumsalzes von REAX 85 A* bei Raumtemperatur gelöst. Die Lösung enthält dann neben dem Lithium-Salz von REAX 85 A 8,1 % Reinfarbe, 0,6 %. $Cl^-$ und 0,25 % $SO_4^{2-}$.

Diese Lösung wird bei Raumtemperatur, einem pH von 8 und einem Druck von 40 bar auf einem Platten-Modul (mit Polysulfonmembran) entsalzt.

Hierzu werden 20 kg salzhaltiges Permeat kontinuierlich durch 20 kg entmineralisiertes Wasser ersetzt und anschließend durch Entfernen von 6,9 kg salzhaltigem Permeat aufkonzentriert. 3,1 kg Konzentrat werden mit 0,26 kg N,N-Dimethylharnstoff und 0,32 kg entmineralisiertem Wasser versetzt und 0,02 kg Borsäure gepuffert. *) Produkt der Fa, Westvao, P.O.Box 70848, Charleston Heights, USA.

Man erhält eine niedrigviskose, lagerstabile Flüssigeinstellung des Farbstoffs der Formel (VII) mit 22 % Reinfarbe, 7 % N,N-Dimethylharnstoff, 0,5 % Borsäure und Wasser ad 100 %. Der pH-Wert der Einstellung beträgt 7,5; $Cl^-$ -Gehalt:

## Ansprüche

1. Verfahren zur Herstellung von lagerstabilen, wäßrigen Lösungen von anionischen Farbstoffen, vorzugsweise Reaktivfarbstoffen, durch Druckpermeation von Lösungen des Rohfarbstoffs, dadurch gekennzeichnet, daß die Ausgangslösung für die Druckpermeation durch Verrühren des gegebenenfalls getrockneten Preßkuchens oder der Suspension des Rohfarbstoffs mit Lösungen von Lithium-, oder Ammoniumsalzen von organischen oder anorganischen Säuren hergestellt wird.

2. Verfahren nach Anspruch 1, dadurch gekennzeichnet, daß Lithiumsalze sowie Trialkylammoniumsalze der Formel

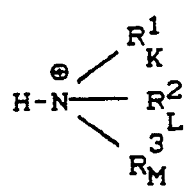

$R^1$ = $C_1$-$C_4$-Alkyl
$R^2$ = -(CH-CH-O)$_n$H

$R^3$ =

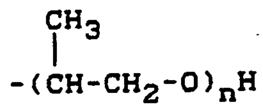

oder

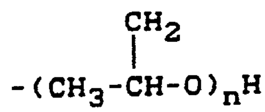

K = 0 bis 2
L = 0 bis 3
M = 0 bis 3
K + L + M = 3
n = 1 - 4

der Salpetersäure, der Kohlensäure und der Citronensäure verwendet werden.

3. Verfahren nach Anspruch 1-2, dadurch gekennzeichnet, daß man den Farbstoff oder Weißtöner in einer höheren Konzentration löst als dies in Wasser möglich wäre, indem man zum Lösen Elektrolytösungen gemäß Anspruch 1-2 im Konzentrationsbrereich 0,1-20 Gew.-% bevorzugt jedoch 0,5-5 Gew.-% verwendet.